# EUROPÄISCHE PATENTSCHRIFT

(11) **EP 2 762 295 B1**
(45) Veröffentlichungstag und Bekanntmachung des Hinweises auf die Patenterteilung: **20.04.2016**
(21) Anmeldenummer: 13153853.0
(22) Anmeldetag: 04.02.2013
(51) Int. Cl.: B29C 70/04, B29C 70/10, B29C 70/46

(54) **Verfahren und Halbzeug zur Herstellung eines Faserverbundformteils und Faserverbundformteil**
Method and semi-finished product for producing a fibre reinforced moulded part and fibre reinforced moulded part
Procédé et demi-produit pour la fabrication d'une pièce de formage composite en fibres et pièce de formage composite en fibres

(43) Veröffentlichungstag der Anmeldung: 06.08.2014
(73) Patentinhaber: Reifenhäuser GmbH & Co. KG Maschinenfabrik, 53844 Troisdorf (DE)
(72) Erfinder: Cinquemani, Claudio, 50733 Köln (DE); Quick, Nicolas, 59955 Winterberg (DE); Nitschke, Michael, 53115 Bonn (DE)
(74) Vertreter: Rohmann, Michael

(56) Entgegenhaltungen:
- EP-A1- 1 787 790
- EP-A2- 0 630 736
- DE-A1- 3 341 292
- US-A1- 2004 118 504

## Beschreibung

Die Erfindung betrifft ein Verfahren zur Herstellung eines Faserverbundformteils. Weiterhin betrifft die Erfindung ein Halbzeug zur Herstellung eines solchen Faserverbundformteils und ein Faserverbundformteil. Die Erfindung betrifft vor allem Faserverbundformteile in Leichtbauweise. Der Begriff Faserverbundformteil meint, dass in dem Verbundformteil Fasern bzw. nicht aufgeschmolzene Fasern bzw. Faserkomponenten vorliegen. Die erfindungsgemäß hergestellten Faserverbundformteile können einerseits eine zweidimensionale Form, insbesondere die Form einer Platte oder dergleichen aufweisen. Vorzugsweise haben die erfindungsgemäß hergestellten Faserverbundformteile eine dreidimensionale Form.

Verfahren der eingangs genannten und in den Oberbegriffen der Ansprüche 1 und 2 definierte Merkmale Art sind aus der Praxis bereits in unterschiedlichen Ausführungsformen bekannt. Bei diesen bekannten Verfahren z.B DE-A-3341292 werden zunächst Halbzeuge hergestellt, die aus einer Matrix aus thermoplastischem Kunststoff und darin eingebetteten Verstärkungsfasern bestehen. Dazu werden die Verstärkungsfasern - insbesondere Glasfasern - zunächst mit Folien, Pulver oder Schmelze aus thermoplastischem Kunststoff kombiniert. Durch Beaufschlagung mit Wärme und Druck wird der thermoplastische Kunststoff aufgeschmolzen und auf diese Weise werden die Verstärkungsfasern mit der Schmelze imprägniert, so dass letztendlich das Halbzeug aus der thermoplastischen Matrix mit den eingebetteten Verstärkungsfasern resultiert. Diese Halbzeuge nennt man auch Organobleche und sie werden in der Regel in Form von Platten hergestellt. Diese Platten müssen zur Herstellung eines Faserverbundformteils mit dreidimensionaler Form in einem späteren zusätzlichen Verarbeitungsschritt erneut erwärmt werden, bevor sie zu dem gewünschten Faserverbundformteil geformt werden können.

Die bekannten Verfahren weisen eine Mehrzahl von Nachteilen auf. Oftmals resultieren Lufteinschlüsse und dadurch entstehen Schwachstellen in dem hergestellten Faserverbundformteil. Fernerhin zeichnen sich insbesondere die im Rahmen der bekannten Verfahren hergestellten Halbzeuge durch eine nicht zufriedenstellende Drapierbarkeit aus. Aus diesem Grunde ist die Herstellung von dreidimensionalen bzw. mehrdimensionalen Faserverbundformteilen Einschränkungen unterworfen. Besonders hervorzuheben ist, dass sich das Recycling von bekannten Faserverbundmaterialien schwierig gestaltet, insbesondere wenn eine thermoplastische Matrix mit anorganischen oder schwer bzw. nicht schmelzbaren Verstärkungsfasern verstärkt ist.

Demgegenüber liegt der Erfindung das technische Problem zugrunde, ein Verfahren der eingangs genannten Art anzugeben, bei dem die vorstehend genannten Nachteile funktionssicher und effektiv vermieden werden können. Fernerhin liegt der Erfindung das technische Problem zugrunde, ein Halbzeug für die Durchführung dieses Verfahrens anzugeben sowie ein entsprechendes Faserverbundformteil.

Zur Lösung dieses technischen Problems lehrt die Erfindung ein Verfahren zur Herstellung eines Faserverbundformteils gemäß den Ansprüchen 1 und 2 bei dem Verstärkungsfasern in einer Matrix aus thermoplastischem Kunststoff eingebettet sind, wobei Mehrkomponentenfasern mit zumindest einer ersten niedrigerschmelzenden Komponente - aus thermoplastischem Kunststoff und mit zumindest einer zweiten höherschmelzenden Komponente - mit Wärme und/oder Druck beaufschlagt werden, so dass die erste bzw. niedrigerschmelzende Komponente schmilzt und eine Matrix aus thermoplastischem Kunststoff bildet, in der die zweite bzw. höherschmelzende Komponente in Form von Verstärkungsfasern eingebettet wird. Auch die zweite bzw. höherschmelzende Komponente besteht aus thermoplastischem Kunststoff. Es liegt weiterhin im Rahmen der Erfindung, dass bei der Beaufschlagung mit Wärme und/oder Druck die Erwärmungstemperatur so gewählt bzw. eingestellt wird, dass lediglich die erste bzw. niedrigerschmelzende Komponente schmilzt. Es versteht sich, dass nach dem Aufbringen von Wärme und/oder Druck bzw. nach dem Formen des Faserverbundformteils ein Abkühlen der Matrix aus dem thermoplastischen Kunststoff mit den eingebetteten Verstärkungsfasern stattfindet. Mit dem erfindungsgemäßen Verfahren wird vorzugsweise ein Faserverbundformteil in Leichtbauweise erzeugt.

Höherschmelzend meint im Rahmen der Erfindung, dass die höherschmelzende Komponente einen höheren Schmelzpunkt hat als die niedrigerschmelzende Komponente, wobei die beiden Schmelzpunkte unter gleichen äußeren Bedingungen gemessen werden. - Die zumindest eine erste Komponente und die zumindest eine zweite Komponente müssen im Rahmen der Erfindung aber nicht zwingend verschiedene Schmelzpunkte aufweisen. Sie können auch gleiche bzw. ungefähr gleiche Schmelzpunkte haben. So kann die erste Komponente amorph ausgebildet sein und die zweite Komponente kristallin bzw. hochkristallin ausgebildet sein. Dann kann gezielt die erste amorphe Komponente aufgeschmolzen werden, während die zweite kristalline Komponente in Form der Verstärkungsfasern in der thermoplastischen Kunststoffmatrix der ersten Komponente eingebettet wird. Es liegt im Rahmen der Erfindung, dass die zumindest eine erste Komponente und die zumindest eine zweite Komponente mit unterschiedlichen Aufschmelzenergien beaufschlagt werden, so dass sich einerseits die thermoplastische Kunststoffmatrix und andererseits die Verstärkungsfasern ergeben.

Für die Beaufschlagung mit Wärme bzw. Hitze und/oder Druck werden die Mehrkomponentenfasern als Endlosfilamente in Form eines Vlieses zweckmäßigerweise in ein Presswerkzeug eingebracht und dort bevorzugt unter Wärmeeinwirkung und/oder Druckeinwirkung verformt. Die Einbettung der Verstärkungsfasern in die Matrix aus thermoplastischem Kunststoff soll im Rahmen der Erfindung vorzugsweise möglichst vollständig und unter Minimierung von Lufteinschlüssen erfolgen.

Eine ganz besonders bevorzugte Ausführungsform der Erfindung ist dadurch gekennzeichnet, dass die Mehrkomponentenfasern als Bikomponentenfasern, mit Kern-Mantel-Konfiguration eingesetzt werden und wobei bevorzugt die bzw. eine Mantelkomponente die erste bzw. niedrigerschmelzende Komponente ist. Nach der Beaufschlagung der Mehrkomponentenfasern bzw. der Bikomponentenfasern mit Wärme und/oder Druck und nach dem Aufschmelzen der ersten bzw. niedrigerschmelzenden Komponente(n) bzw. Mantelkomponente(n) bildet dann vorzugsweise die zumindest eine Kernkomponente bzw. die Kernkomponente die Verstärkungsfasern des Verbundformteils aus. Grundsätzlich liegt es auch im Rahmen der Erfindung, dass Mehrkomponentenfasern bzw. Bikomponentenfasern mit Side-by-side-Konfiguration eingesetzt werden. Dann ist zweckmäßigerweise eine Seitenkomponente bzw. zumindest eine Seitenkomponente die erste bzw. niedrigerschmelzende Komponente, die bei Beaufschlagung mit Wärme und/oder Druck schmilzt und die Matrix aus thermoplastischem Kunststoff bildet und dann ist bevorzugt eine bzw. zumindest eine Seitenkomponente die zweite bzw. höherschmelzende Komponente, die die Verstärkungsfasern des Faserverbundformteils ausbildet. Es liegt auch im Rahmen der Erfindung, dass andere Konfigurationen von Mehrkomponentenfasern bzw. Bikomponentenfasern im Rahmen des erfindungsgemäßen Verfahrens eingesetzt werden können, beispielsweise sogenannte Segmented-pie-Fasern oder Island-in-the-sea-Fasern. Eine sehr empfohlene Ausführungsform der Erfindung ist dadurch gekennzeichnet, dass Bikomponentenfasern als Mehrkomponentenfasern eingesetzt werden. Es hat sich als besonders vorteilhaft erwiesen, dass die Mehrkomponentenfasern bzw. Bikomponentenfasern in Form eines Vliesstoffes und insbesondere in Form eines Wirrvlieses verwendet werden. Die Flächengewichte der Vliesstoffe sind dabei grundsätzlich frei wählbar.

Erfindungsgemäss werden die Mehrkomponentenfasern bzw. Bikomponentenfasern in Form von Endlosfilamenten eingesetzt werden. Die Mehrkomponentenfasern bzw. Bikomponentenfasern werden in Form eines Spinnvlieses für das erfindungsgemäße Verfahren verwendet. Erfindungsgemäss können auch die Mehrkomponentenfasern in Form eines Meltblown-Vlieses und gemäß einer Ausführungsvariante in Form eines Biax-Meltblown-Vlieses eingesetzt werden. Die Mehrkomponentenfasern können grundsätzlich auch im Rahmen eines Airlaid- oder Wetlaid-Verfahrens erzeugt werden.

Nach einer sehr empfohlenen Ausführungsform der Erfindung bestehen die zweite bzw. höherschmelzende Komponente und die erste bzw. niedrigerschmelzende Komponente der Mehrkomponentenfasern bzw. Bikomponentenfasern aus dem gleichen Kunststoff bzw. aus der gleichen Kunststoffart. Wenn nach bevorzugter Ausführungsvariante der Erfindung Mehrkomponentenfasern bzw. Bikomponentenfasern in Kern-Mantel-Konfiguration eingesetzt werden, besteht gemäß einer Ausführungsform der Kern aus einem Polyester bzw. im Wesentlichen aus einem Polyester und der Mantel aus einem anderen bzw. niedrigerschmelzenden Kunststoff als der Polyester. Als Polyester wird empfohlenermaßen Polyethylenterephthalat (PET) eingesetzt. Eine vorteilhafte Ausführungsform der Erfindung ist dadurch gekennzeichnet, dass als Kernkomponente ein Polyester bzw. Poly-ethylenterephthalat eingesetzt wird und als Mantelkomponente ein Copolymerisat eines Polyesters bzw. von Polyethylenterephthalat eingesetzt wird. - Eine andere bevorzugte Ausführungsform der Erfindung zeichnet sich dadurch aus, dass als Kernkomponente Polypropylen eingesetzt wird und als Mantelkomponente ein Copolymerisat von Polypropylen eingesetzt wird. - Wenn nach empfohlener Ausführungsform der Erfindung gleiche Kunststoffarten für die Komponenten der Mehrkomponentenfasern bzw. Bikomponentenfasern eingesetzt werden, können die erfindungsgemäß hergestellten Faserverbundformteile besonders einfach recycelt werden.

Wie oben bereits dargelegt, wird nach einer Ausführungsform der Erfindung zur Herstellung eines erfindungsgemäßen Faserverbundformteils ein Spinnvlies aus Mehrkomponentenfasern bzw. Bikomponentenfasern eingesetzt und zwar ein Spinnvlies aus Endlosfilamenten. Ein solches Spinnvlies wird bevorzugt mittels eines Spun-Bond-Verfahrens hergestellt. Dabei werden Endlosfilamente aus thermoplastischem Kunststoff aus einer Spinnerette ersponnen und anschließend in einer Kühlkammer gekühlt. Zweckmäßigerweise werden diese gekühlten Endlosfilamente daraufhin in eine Verstreckeinheit eingeführt und bevorzugt schließlich auf einem Förderband bzw. Ablagesiebband abgelegt. Empfohlenermaßen weisen die Endlosfilamente des Spinnvlieses einen Faserdurchmesser von 10 bis 35 µm auf und vorzugsweise ist der Faserdurchmesser der Endlosfilamente größer als 10 µm bzw. deutlich größer als 10 µm. Zweckmäßigerweise beträgt der Schmelzflussindex (MFI) der zur Herstellung eines Spinnvlieses eingesetzten Kunststoffe 10 bis 100 g/10 min. Der Schmelzflussindex (MFI) wird im Rahmen der Erfindung nach EN ISO 1133 bei einer Prüftemperatur von 230 °C und bei einer Nennmasse von 2,16 kg gemessen. - Wenn nach empfohlener Ausführungsform der Erfindung ein Vliesstoff bzw. ein Spinnvlies zur Herstellung eines erfindungsgemäßen Faserverbundformteils eingesetzt wird, erfolgt zweckmäßigerweise eine Verfestigung des Vliesstoffes bzw. Spinnvlieses und zwar bevorzugt durch Wasserstrahlverfestigung und/oder mechanisches Vernadeln.

Eine bevorzugte Ausführungsform des erfindungsgemäßen Verfahrens ist dadurch gekennzeichnet, dass die Mehrkomponentenfasern bzw. dass der Vliesstoff durch Beaufschlagung mit Wärme und/oder Druck unmittelbar im Zuge eines Thermoformprozesses und/oder eines Spritzgießprozesses in ein Faserverbundformteil umgewandelt wird/werden. Die Mehrkomponentenfasern bzw. der Vliesstoff wird/werden dabei also unmittelbar und ohne zwischengeschaltete Aufschmelz- und Erhärtungsprozesse zum Endprodukt verarbeitet. Thermoformprozess meint insbesondere einen Tiefziehprozess. Bei der vorstehend beschriebenen bevorzugten Ausführungsform kann der Vliesstoff unmittelbar tiefgezogen werden. Aufgrund der guten Handhabbarkeit und guten Drapierbarkeit des Vliesstoffen können erfindungsgemäß problemlos dreidimensionale bzw. mehrdimensionale Formteile hergestellt werden.

Nach einer anderen Ausführungsform des erfindungsgemäßen Verfahrens werden die Mehrkomponentenfasern bzw. wird der Vliesstoff aus den Mehrkomponentenfasern in einem ersten Schritt mit Wärme und/oder Druck beaufschlagt und dabei wird ein Halbzeug mit einer Matrix aus thermoplastischem Kunststoff und darin eingebetteten Verstärkungsfasern aus der bzw. den zweiten bzw. höherschmelzenden Komponenten gebildet. Dieses Halbzeug aus thermoplastischer Matrix und eingebetteten zweiten bzw. höherschmelzenden Verstärkungsfasern wird dann erst später bzw. in einem zweiten Schritt durch Beaufschlagung mit Wärme und/oder Druck im Zuge eines Thermoformprozesses und/oder eines Spritzgießprozesses in ein Faserverbundformteil umgewandelt. Dabei wird also zunächst ein Halbzeug hergestellt, dass dann später zu dem Endprodukt verarbeitet wird, beispielsweise durch Tiefziehen oder Thermopressen zu einem dreidimensionalen bzw. mehrdimensionalen Formteil. Gemäß einer Ausführungsvariante der Erfindung wird das Halbzeug aus der thermoplastischen Matrix und den eingebetteten zweiten bzw. höherschmelzenden Verstärkungsfasern in Form von Platten hergestellt.

Nach einer Ausführungsform liegt der Schmelzpunkt der zumindest einen höherschmelzenden Komponente mindestens 40 °C, bevorzugt mindestens 50 °C und sehr bevorzugt mindestens 70 °C höher als der Schmelzpunkt der zumindest einen niedrigerschmelzenden Komponente der Mehrkomponentenfasern. Wenn nach empfohlener Ausführungsform der Erfindung Mehrkomponentenfasern in Kern-Mantel-Konfiguration eingesetzt werden, beträgt das Verhältnis bzw. das Volumenverhältnis Kern/Mantel zweckmäßigerweise 65/35 bis 45/55, bevorzugt 60/40 bis 55/45 und besonders bevorzugt 60/40 bzw. etwa 60/40. Durch Auswahl des Volumenverhältnisses Kern/Mantel können die mechanischen Eigenschaften des Faserverbundformteils gezielt eingestellt werden.

Gegenstand der Erfindung ist auch ein Halbzeug zur Herstellung eines Faserverbundformteils mit in einer Matrix aus thermoplastischem Kunststoff eingebetteten Verstärkungsfasern. Gegenstand der Erfindung ist weiterhin auch ein Faserverbundformteil, das nach dem oben beschriebenen erfindungsgemäßen Verfahren und/oder aus dem vorstehend beschriebenen erfindungsgemäßen Halbzeug herstellbar ist, wobei Verstärkungsfasern bzw. höherschmelzende Verstärkungsfasern in einer Matrix aus thermoplastischem Kunststoff bzw. aus niedrigerschmelzendem thermoplastischem Kunststoff eingebettet ist.

Der Erfindung liegt die Erkenntnis zugrunde, dass mit dem erfindungsgemäßen Verfahren auf einfache und wenig aufwendige Weise Faserverbundformteile mit optimalen Eigenschaften hergestellt werden können. Nachteilhafte Lufteinschlüsse in der thermoplastischen Matrix eines erfindungsgemäß hergestellten Faserverbundformteils können vermieden werden bzw. zumindest weitgehend vermieden werden. Grundsätzlich kann bei dem erfindungsgemäßen Verfahren die Formteilformung auf einfache Weise in einem einzigen Presswerkzeug erfolgen. Die für die Herstellung der erfindungsgemäßen Faserverbundformteile vorzugsweise eingesetzten Vliesstoffe bzw. Spinnvliese zeichnen sich durch eine einfache Handhabbarkeit und Drapierbarkeit aus und sie können ohne Weiteres als flexible Rollenware eingesetzt werden. Mit dem erfindungsgemäßen Verfahren sind auf einfache Weise dreidimensionale bzw. mehrdimensionale Faserverbundformteile herstellbar und zwar insbesondere in Leichtbauweise. Zur Herstellung bestimmter Faserverbundformteile können Vlieslagen auch zu einem Laminat geschichtet werden, wobei Anzahl, Menge und Orientierung der Vlieslagen frei wählbar ist. Vliesstoffe können im Rahmen des erfindungsgemäßen Verfahrens auch als Decklage für Sandwichbauteile mit Kernlagenverstärkung eingesetzt werden. Die erfindungsgemäß erzeugten Faserverbundformteile zeichnen sich auch durch hervorragende mechanische Eigenschaften aus. Es können Faserverbundformteile hergestellt werden, die sich durch eine hohe Festigkeit und Steifigkeit bei gleichzeltig niedriger Dichte sowie durch eine hohe Schlagzähigkeit auszeichnen. Weiterhin ist zu betonen, dass insbesondere bei entsprechender Materialwahl die erfindungsgemäß hergestellten Faserverbundformteile auf einfache und wenig aufwendige Weise recycelt werden können.

Nachfolgend wird die Erfindung anhand einer lediglich ein Ausführungsbeispiel darstellenden Zeichnung näher erläutert. Es zeigen in schematischer Darstellung:
- Fig. 1: eine Vorrichtung zur Durchführung des erfindungsgemäßen Verfahrens und
- Fig. 2: rein schematisch die Durchführung des erfindungsgemäßen Verfahrens.

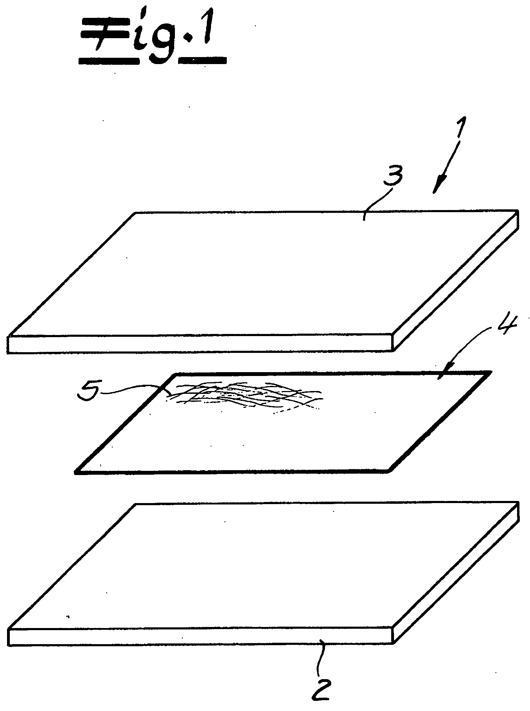

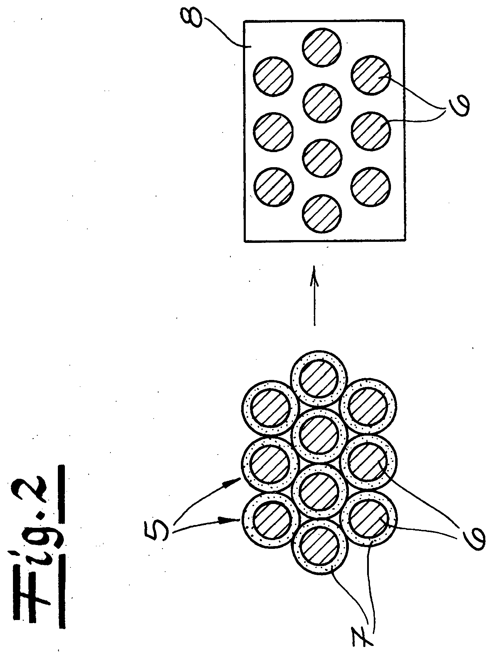

Die Fig. 1 zeigt sehr schematisch ein Presswerkzeug 1 mit zwei Pressplatten 2, 3. Zwischen den Pressplatten 2, 3 wird vorzugsweise und im Ausführungsbeispiel ein Spinnvlies 4 aus Bikomponentenfasern 5 angeordnet. Bei den Bikomponentenfasern 5 handelt es sich um Endlosfilamente. Die Bikomponentenfasern weisen eine Kern-Mantel-Konfiguration auf und zwar mit einer höherschmelzenden Komponente 6 im Kern und einer niedrigerschmelzenden Komponente 7 im Mantel. Bei der höherschmelzenden Komponente 6 mag es sich im Ausführungsbeispiel um Polyethylenterephthalat (PET) handeln und bei niedrigerschmelzenden Komponente um ein niedrigerschmelzendes Copolymerisat des Polyethylenterephthalats. Beim Zusammenpressen der Pressplatten 2, 3 wird das Spinnvlies 4 mit Wärme und Druck beaufschlagt, so dass die niedrigerschmelzende Komponente 7 aufschmilzt. Die Erwärmungstemperatur wird zweckmäßigerweise so gewählt, dass lediglich die niedrigerschmelzende Komponente 7 aufschmilzt und die höherschmelzende Komponente 6 dagegen nicht aufgeschmolzen wird. Auf diese Weise bleibt die höherschmelzende Komponente 6 gleichsam in Form von Verstärkungsfasern erhalten und diese höherschmelzende Komponente 6 bzw. die entsprechenden Verstärkungsfasern werden in einer thermoplastischen Matrix 8 aus der niedrigerschmelzenden Komponente 7 eingebettet (siehe rechte Seite der Fig. 2). Auf die vorstehend beschriebene Weise kann nach bevorzugter Ausführungsform der Erfindung unmittelbar ein Faserverbundformteil hergestellt werden. Grundsätzlich können im Rahmen der Erfindung mit speziellen Presswerkzeugen auf einfache Weise dreidimensionale bzw. mehrdimensionale Formteile auch mit komplizierten Strukturen hergestellt werden. Dazu trägt die flexible Handhabbarkeit und die gute Drapierbarkeit der Spinnvliese 4 bei. Fig. 2 zeigt im Übrigen, dass die höherschmelzende Komponente 6 bzw. die entsprechenden Verstärkungsfasern vollständig in die thermoplastische Matrix 8 aus der niedrigerschmelzenden Komponente eingebettet sind. Störende Lufteinschlüsse sind hier nicht zu beobachten und sie können bei Verwirklichung des erfindungsgemäßen Verfahrens auf einfache Weise vermieden werden.

## Patentansprüche

1. Verfahren zur Herstellung eines Faserverbundformteils, bei dem Verstärkungsfasern (6) in einer Matrix (8) aus thermoplastischem Kunststoff eingebettet sind, wobei Mehrkomponentenfasern (5) mit zumindest einer ersten niedrigerschmelzenden Komponente (7) aus thermoplastischem Kunststoff und mit zumindest einer zweiten höherschmelzenden Komponente (6) aus thermoplastischem Kunststoff mit Wärme und/oder Druck beaufschlagt werden, so dass die erste niedrigerschmelzende Komponente schmilzt und eine Matrix (8) aus thermoplastischem Kunststoff bildet, in der die zweite höherschmelzende Komponente (6) als Verstärkungsmaterial bzw. als Verstärkungsfasern eingebettet wird **dadurch gekennzeichnet, dass** die Mehrkomponentenfasern als Endlosfilamente in Form eines nach einem Spun-Bond-Verfahren hergestellten Spinnvlieses bzw. Wirrvlieses eingesetzt werden.

2. Verfahren zur Herstellung eines Faserverbundformteils, bei dem Verstärkungsfasern (6) in einer Matrix (8) aus thermoplastischem Kunststoff eingebettet sind, wobei Mehrkomponentenfasern mit zumindest einer ersten niedrigerschmelzenden Komponente (7) aus thermoplastischem Kunststoff und mit zumindest einer zweiten höherschmelzenden Komponente (6) aus thermoplastischem Kunststoff mit Wärme und/oder Druck beaufschlagt werden, so dass die erste niedrigerschmelzende Komponente schmilzt und eine Matrix (8) aus thermoplastischem Kunststoff bildet, in der die zweite höherschmelzende Komponente (6) als Verstärkungsmaterial bzw. als Verstärkungsfasern eingebettet wird, **dadurch gekennzeichnet, dass** die Mehrkomponentenfasern als Endlosfilamente in Form eines Meltblown-Vlieses - vorzugsweise in Form eines Biax-Meltblown-Vlieses - eingesetzt werden.

3. Verfahren nach einem der Ansprüche 1 oder 2, wobei Mehrkomponentenfasern (5) mit Kern-Mantel-Konfiguration eingesetzt werden und wobei vorzugsweise die Mantelkomponente die erste bzw. niedrigerschmelzende Komponente ist.

4. Verfahren nach einem der Ansprüche 1 oder 2, wobei Mehrkomponentenfasern (5) mit Side-by-side-Konfiguration eingesetzt werden.

5. Verfahren nach einem der Ansprüche 1 bis 4, wobei Bikomponentenfasern als Mehrkomponentenfasern (5) eingesetzt werden.

6. Verfahren nach einem der Ansprüche 1 bis 5, wobei die zweite bzw. höherschmelzende Komponente (6) und die erste bzw. niedrigerschmelzende Komponente (7) aus dem gleichen Kunststoff bzw. aus der gleichen Kunststoffart bestehen.

7. Verfahren nach einem der Ansprüche 1 bis 6, wobei der Vliesstoff (4) vor der Beaufschlagung mit Wärme und/oder Druck verfestigt wird.

8. Verfahren nach einem der Ansprüche 1 bis 7, wobei der Vliesstoff (4) durch Beaufschlagung mit Wärme und/oder Druck unmittelbar im Zuge eines Thermoformprozesses und/oder eines Spritzgießprozesses in ein Faserverbundformteil umgewandelt wird.

9. Verfahren nach einem der Ansprüche 1 bis 8, wobei der Vliesstoff (4) in einem ersten Schritt mit Wärme und/oder Druck beaufschlagt wird und dabei ein Halbzeug mit einer Matrix aus thermoplastischem Kunststoff (8) und darin eingebetteten Verstärkungsfasern (6) glebildet wird und wobei das Halbzeug in einem zweiten Schritt durch Beaufschlagung mit Wärme und/oder Druck im Zuge eines Thermoformprozesses und/oder eines Spritzgießprozesses in ein Faserverbundformteil umgewandelt wird.

10. Halbzeug zur Herstellung eines Faserverbundformteils, bei dem Verstärkungsfasern (6) als Endlosfilamente in einer Matrix aus thermoplastischem Kunststoff (8) eingebettet sind, hergestellt nach einem Verfahren gemäß Anspruch 9.

11. Faserverbundformteil, hergestellt nach einem Verfahren gemäß einem der Ansprüche 1 bis 8 und/oder aus einem Halbzeug nach Anspruch 10, wobei höherschmelzende Verstärkungsfasern als Endlosfilamente - in einer Matrix aus niedrigerschmelzendem thermoplastischem Kunststoff eingebettet sind.

## Claims

1. Method for producing a fibre composite moulded part in which reinforcing fibres (6) are embedded in a matrix (8) of thermoplastic material, wherein multicomponent fibres (5) comprising at least one first lower-melting component (7) of thermoplastic material and comprising at least one second higher-melting component (6) of thermoplastic material are acted upon with heat and/or pressure so that the first lower-melting component melts and forms a matrix (8) of thermoplastic material in which the second higher-melting component (6) is embedded as reinforcing material or as reinforcing fibres, **characterized in that** the multicomponent fibres are used as endless filaments in the form of a spunbond or random nonwoven material.

2. Method for producing a fibre composite moulded part in which reinforcing fibres (6) are embedded in a matrix (8) of thermoplastic material, wherein multicomponent fibres comprising at least one first lower-melting component (7) of thermoplastic material and comprising at least one second higher-melting component (6) of thermoplastic material are acted upon with heat and/or pressure so that the first lower-melting component melts and forms a matrix (8) of thermoplastic material in which the second higher-melting component (6) is embedded as reinforcing material or as reinforcing fibres, **characterized in that** the multicomponent fibres are used as endless filaments in the form of a meltblow nonwoven - preferably in the form of a biax meltblown nonwoven.

3. The method according to any one of claims 1 or 2, wherein multicomponent fibres (5) having a core-cladding configuration are used and wherein preferably the cladding component is the first or lower-melting component.

4. The method according to any one of claims 1 or 2, wherein multicomponent fibres (5) having a side-by-side configuration are used.

5. The method according to any one of claims 1 to 4, wherein bicomponent fibres are used as multicomponent fibres (5).

6. The method according to any one of claims 1 to 5, wherein the second or higher-melting component (6) and the first or lower-melting component (7) consists of the same plastic or of the same type of plastic.

7. The method according to any one of claims 1 to 6, wherein the nonwoven fabric (4) is consolidated before being acted upon with heat and/or pressure.

8. The method according to any one of claims 1 to 7, wherein the nonwoven fabric (4) is converted directly into a fibre composite moulded part in the course of a thermoforming process and/or an injection moulding process by action with heat and/or pressure.

9. The method according to any one of claims 1 to 8, wherein the nonwoven fabric (4) is acted upon with heat and/or pressure in a first step and thereby a semi-finished product having a matrix of thermoplastic material (8) and reinforcing fibres (6) embedded therein is formed and wherein in a second step by action with heat and/or pressure in the course of a thermoforming process and/or an injection moulding process the semi-finished product is converted into a fibre composite moulded part.

10. Semi-finished product for producing a fibre composite moulded part wherein reinforcing fibres (6) as endless filaments are embedded in a matrix of thermoplastic material (8) produced according to a method according to claim 9.

11. Fibre composite moulded part produced according to a method according to any one of claims 1 to 8 and/or from a semi-finished product according to claim 10, wherein higher-melting reinforcing fibres as endless filaments are embedded in a matrix of lower-melting thermoplastic material.

## Revendications

1. Procédé de fabrication d'une pièce moulée en fibres composites, dans lequel des fibres de renfort (6) sont enchâssées dans une matrice (8) en plastique thermoplastique, sachant que des fibres multi-composantes (5) comprenant au moins une première composante à point de fusion bas (7) en plastique thermoplastique et comprenant au moins une seconde composante à point de fusion haut (6) en plastique thermoplastique reçoivent de la chaleur et/ou de la pression, de sorte que la première composante à point de fusion bas fond et forme une matrice (8) en plastique thermoplastique, dans laquelle la seconde composante à point de fusion haut (6) est enchâssée en tant que matériau de renfort, respectivement, en tant que fibres de renfort, **caractérisé en ce que** les fibres multi-composantes sont employées en tant que filaments sans fin sous forme de non-tissé filé, respectivement de non-tissé enchevêtré, fabriqué selon un procédé spun-bond.

2. Procédé de fabrication d'une pièce moulée en fibres composites, dans lequel des fibres de renfort (6) sont enchâssées dans une matrice (8) en plastique thermoplastique, sachant que des fibres multi-composantes comprenant au moins une première composante à point de fusion bas (7) en plastique thermoplastique et comprenant au moins une seconde composante à point de fusion haut (6) en plastique thermoplastique reçoivent de la chaleur et/ou de la pression, de sorte que la première composante à point de fusion bas fond et forme une matrice (8) en plastique thermoplastique, dans laquelle la seconde composante à point de fusion haut (6) est enchâssée en tant que matériau de renfort, respectivement, en tant que fibres de renfort, **caractérisé en ce que** les fibres multi-composantes sont employées en tant que filaments sans fin sous forme d'un non-tissé extrudé-soufflé, de préférence sous forme d'un non-tissé extrudé-soufflé biax.

3. Procédé selon la revendication 1 ou 2, dans lequel des fibres multi-composantes (5) sont employées avec une configuration noyau-enveloppe et dans lequel la composante de l'enveloppe est de préférence la première composante, respectivement, la composante à point de fusion bas.

4. Procédé selon la revendication 1 ou 2, dans lequel des fibres multi-composantes (5) sont employées avec une configuration côte-à-côte.

5. Procédé selon l'une des revendications 1 à 4, dans lequel des fibres bi-composantes sont employées en tant que fibres multi-composantes (5).

6. Procédé selon l'une des revendications 1 à 5, dans lequel la seconde composante, respectivement la composante à point de fusion haut (6) et la première composante, respectivement, la composante à point de fusion bas (7), sont composées du même plastique, respectivement du même type de plastique.

7. Procédé selon l'une des revendications 1 à 6, dans lequel la toile non-tissée (4) est renforcée avant de recevoir de la chaleur et/ou de la pression.

8. Procédé selon l'une des revendications 1 à 7, dans lequel la toile non-tissée (4) est transformée en une pièce moulée en fibres composites directement au cours d'un procédé de thermo-formage et/ou d'un procédé de moulage par injection par l'apport de chaleur et/ou de pression.

9. Procédé selon l'une des revendications 1 à 8, dans lequel la toile non-tissée (4) reçoit de la chaleur et/ou de la pression lors d'une première étape, et un produit semi-fini est alors formé avec une matrice en plastique thermoplastique (8) et des fibres de renfort (6) enchâssées dedans, et dans lequel le produit semi-fini est transformé en une pièce moulée en fibres composites lors d'une seconde étape au cours d'un procédé de thermo-formage et/ou d'un procédé de moulage par injection par l'apport de chaleur et/ou de pression.

10. Produit semi-fini destiné à la fabrication d'une pièce moulée en fibres composites, dans lequel des fibres de renfort (6) en tant que filaments sans fin sont enchâssées dans une matrice en plastique thermoplastique (8), fabriquée selon un procédé selon la revendication 9.

11. Pièce moulée en fibres composites, fabriquée selon un procédé selon l'une des revendications 1 à 8 et/ou d'un produit semi-fini selon la revendication 10, dans lequel des fibres de renfort à point de fusion haut en tant que filaments sans fin, sont enchâssées dans une matrice de plastique thermoplastique à point de fusion bas.
